# EUROPEAN PATENT APPLICATION

(11) **EP 4 644 176 A1**
(43) Date of publication of application: **05.11.2025**
(21) Application number: 24174098.4
(22) Date of filing: 03.05.2024
(51) Int. Cl.: B60P 1/02, B60P 1/44

(54) **TWIN-DECK SEMITRAILER CONFIGURATION**

(71) Applicant: Van Eck Trailers B.V., 4153 BV Beesd (NL)
(72) Inventor: YAZICI, SELCUK, Sakarya (TR); CAGLAYAN, AYKUT, Beesd (NL)
(74) Representative: Yamankaradeniz, Kemal

(57) **Abstract**

It is a system that enables the moving floor/platform and rear lift of twine-deck semitrailers to operate with electric drive in up/down and open/close directions, wherein; it comprises an electric actuator (1) that provides the necessary electrical drive to the cylinders to enable the moving floor/platform and rear lift to operate in the up/down and open/close direction, a controller and digital screen (2) that enable the functions of the system to be adjusted, calibrated and the system to be monitored, an Input/Output user controller (3) that reads the technical information of the electric actuators (1) and transmits it to the controller and digital screen (2) and enables the user to intervene in the system, a communication line (4) that provides electronic communication between the electric actuators (1) and all connections, an electrical supply negative line (5) that provides the negative electricity supply needed by the system, an electrical supply positive line (6) that provides the positive electrical supply needed by the system.

## Description

### Technical Field

The invention relates to a new generation twin-deck semitrailer configuration that enables the vertical axis up/down movement of the intermediate platform of twin-deck semitrailers to be transformed into a 100% electric structure instead of working with the help of hydraulic cylinders and to increase efficiency.

### Prior Art

Trailers are road vehicles for the purpose of carrying loads, which are pulled by a motor vehicle and have at least one axle designed and manufactured according to the characteristics of the load it will carry, and are connected to the vehicle they are pulled by means of a connection device defined as drawbar, turntable, hook, kingpin or similar names and according to the highway regulations, they are vehicles used for load carrying purposes classified as semitrailers O1, O2, O3, O4.

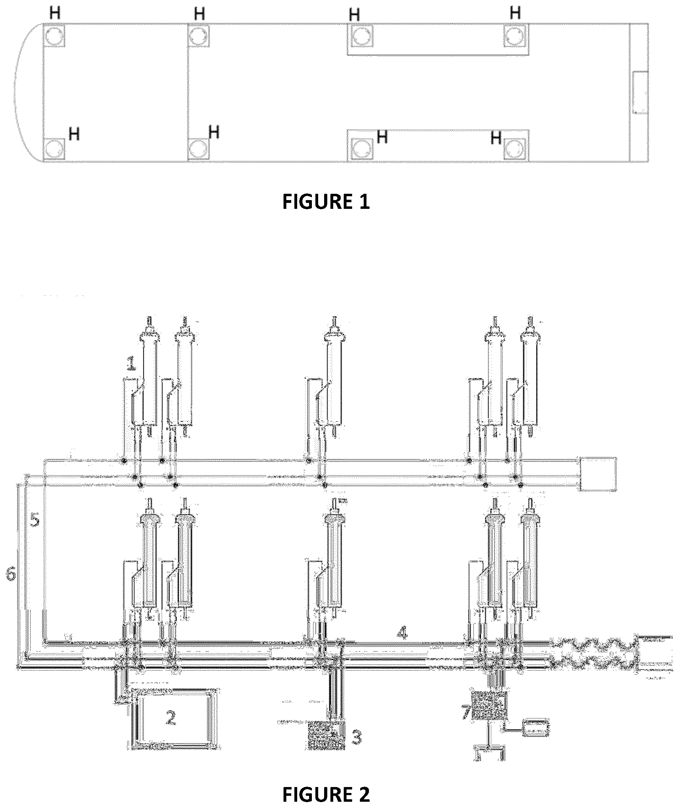

In the semitrailers with a moving intermediate platform called MF Twin deck, which are currently produced and popular in the sector, up/down movement is performed with the help of hydraulic cylinders (H), the number of which is determined according to the vehicle design and customer demand. Generally, with the help of 6 or 8 hydraulic cylinders (H), the useful internal clear height of the vehicle can be adjusted according to the size of the load carried. (See Figure 1).

Hydraulic cylinders (H) can be adjusted in two levels according to the requested internal clear height by moving them up and down on the vertical axis. There are mechanical locking positions in both levels, and these locking positions can be adjusted according to the requested height.

In order for the hydraulic cylinders (H) to operate, hydraulic piping and hydraulic storage tanks and an automation system that will move the cylinders by sending this hydraulic to the cylinders in the desired amount are needed.

Therefore, in order to control all cylinders on the vertical axis, hydraulic connection equipment and installations are mounted at the inlet and outlet of each cylinder. It is very difficult to control the reactions of these hydraulic cylinders, which enable the movement of the platform, against mechanical friction. The viscosity of the hydraulic fluid changes due to many external factors, and this brings with it many risks during unloading and loading operations.

Although hydraulic fluids can be selected according to their heat and cold resistance, if customers and especially drivers do not regularly check their oil, it may cause serious problems and material damage in logistics activities.

Unfortunately, automation systems used to control the fluidity of the hydraulic fluid do not prevent the problem from occurring. It cannot prevent losses that may occur due to external factors in automation systems that only control the pressure and speed of the hydraulic fluid.

In addition, the assembly and start-up processes of said hydraulic trailer are quite difficult and involve risks that are prone to many errors. A minor tightening torque error to be made by the relevant personnel in the hydraulic connection equipment can cause major consequences during the logistics activity.

Unfortunately, the efficiency of hydraulic systems is not even at acceptable levels. It causes a lot of work and time loss during both maintenance and installation phases. Since the system consists of many independent equipment (cylinder, hydraulic fluid, pneumatic and electrical equipment), it has many detailed equipment that is likely to malfunction.

Since there is hydraulic oil in the system, a spark that may occur due to heating or external factors has a serious risk of uncontrollable fire. As it is known, periodic maintenance is very important in hydraulic systems and additional maintenance costs arise in the existing structure.

In summary, the following main titles are general titles where the shortcomings and risks of the present system cannot be ignored and new disadvantages will come up after each use or installation:
- Productivity
- Hydraulic fluid (oil) and its risks
- Installation and commissioning difficulties
- Expensive and long-lasting maintenance
- Difficult controllability and too much influence from external factors
- Regeneration

Abstract of the application numbered US20020182026A1, which emerged as a result of technical research is as follows: "A split-level trailer is shown where the upper story can conveniently bow to load or unload cargo. The upper deck is supported on four poles mounted on each corner of the lower deck. The forward poles are fixed in place, but the rear poles are mounted turning to the lower deck, allowing freedom of movement back and forth. The upper deck is rotatably mounted on the upper ends of the forward poles. The sleeves mounted on a travers at the rear edge of the upper deck, slide up and down on the rear poles as the deck is raised or lowered. The cross member has some freedom of movement according to the top deck to prevent connecting to the rear poles when the top deck is moved up or down."

As can be seen, the system relates to a twin-deck trailer configuration with hydraulic cylinders and does not mention a configuration that can provide a solution to the disadvantages mentioned above.

As a result, it has become necessary to make a development in the relevant technical field due to the negativities described above and the inadequacy of existing solutions on the subject.

### Purpose of the Invention

The invention aims to present a structure with different technical features that brings a new perspective in this field, unlike the structures used in the present art.

The primary purpose of the invention is to present a new generation twin-deck semitrailer configuration that enables the vertical axis up/down movement of the intermediate platform of twin-deck semitrailers to be transformed into a 100% electric structure instead of working with the help of hydraulic cylinders and to increase efficiency.

A purpose of the invention is to present an efficient system. A hydraulic system is generally around 40 to 44% efficient, depending on the complexity of the system. As the details in the connection parts increase, their efficiency may decrease at a similar rate. However, an electric actuator has three main components: engine, transmission and screw. An engine powers the transmission, which drives the screw with an attached nut. As the screw rotates, the nut turns and pushes an attached guide pipe that transmits linear force and motion. Engines range from brushed-dc engines to higher-up servo engines for low duty cycle applications. Transmissions are typically belt drives or gearboxes. Screw types range from simple, low-efficiency Acme screws to cost-effective and efficient ball screws to high-efficiency and expensive roller screws. All these components create energy losses. Typically, an actuator will be 60% to 70% efficient depending on the installation. As can be seen, when switching from the hydraulic system to the full electric system, an additional efficiency of minimum 20% occurs at the basic level.

Another purpose of the invention is to eliminate hydraulic fluid risks. Hydraulic oil is eliminated by means of fully electric operation. All risks caused by hydraulic fluid due to external factors are completely eliminated.

Another purpose of the invention is to present a system that is easy to install and commission. Many electric actuators on the market have integrated controllers, and this makes them very simple to install. Also, on an electric machine, the product index is usually much easier; there are no filters, hoses, valves, etc. In some applications, such as the motion control function at the very end of a combine harvester, a hydraulic package requires running hoses along the length of the machine. It is easier to wire an electromechanical actuator instead.

Another purpose of the invention is to present a system that is easy to maintain. Most electric actuators require very little maintenance. This reduces operating costs.

Another purpose of the invention is to present a system that is easy to control. Electric actuators are generally easier to control than a hydraulic package, especially as designs proceeds to more autonomous operation.

Another purpose of the invention is to provide a system that allows energy regeneration. Thus, depending on the application, the clear effect on productivity is provided much higher. Regeneration is also possible in mobile hydraulic systems, but is not currently in common use.

In order to achieve the objects described above, the invention is a system that enables the moving floor/platform and rear lift of twin deck semitrailers to operate with electric drive in up/down and open/close directions, wherein; it comprises the following:
- An electric actuator that provides the necessary electrical drive to the cylinders to enable the moving floor/platform and rear lift to operate in the up/down and open/close direction,
- A controller and digital screen that enable the functions of the system to be adjusted, calibrated and the system to be monitored,
- An Input/Output user controller that reads the technical information of the electric actuators and transmits them to the controller and digital screen, allowing the user to intervene in the system,
- A communication line that provides electronic communication between electric actuators and all connections,
- An electrical supply negative line that provides the negative electricity supply needed by the system,
- An electrical supply positive line that provides the positive electricity supply needed by the system.

The structural and characteristic features and all the advantages of the invention will be understood more clearly by means of the drawings given below and the detailed description written with references to these drawings, and therefore the evaluation needs to be made by taking these drawings and the detailed description into consideration.

### Figures to Help Understanding of the Invention

**Figure 1** is a top view of the present hydraulic system.
**Figure 2** is a general view of the system, which is subject of the invention.

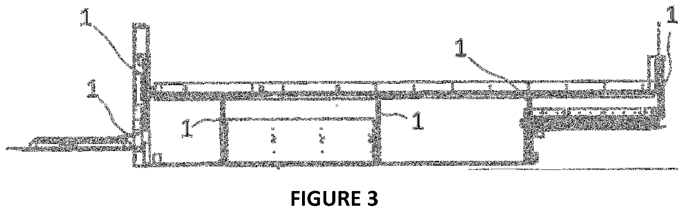

**Figure 3** is a view of the vehicle assembly.

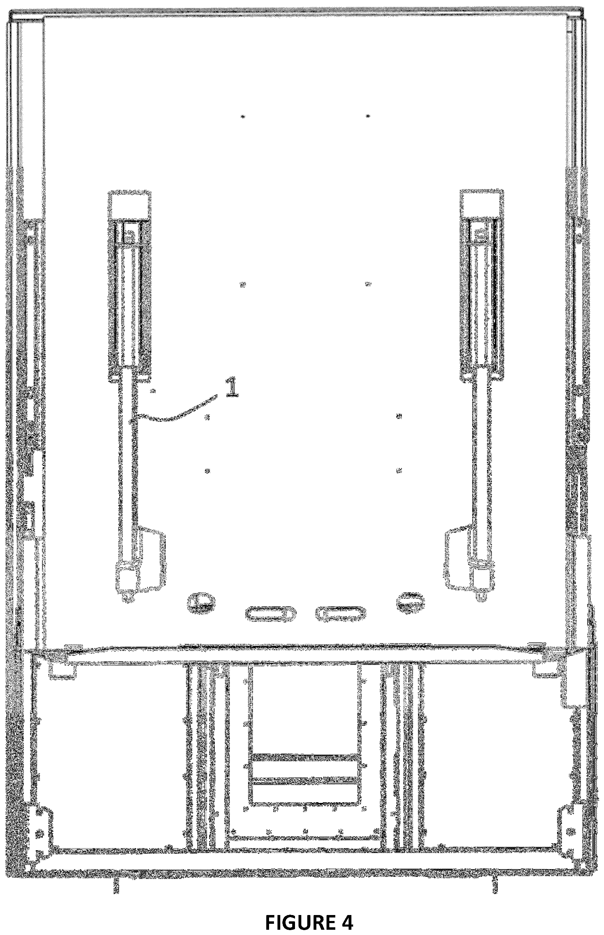

**Figure 4** is a view of the front panel of the vehicle.

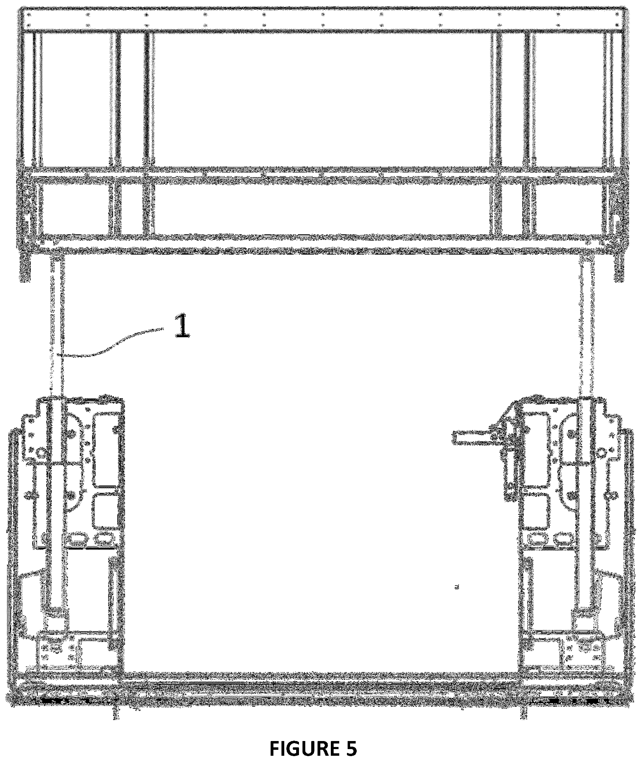

**Figure 5** is a view of the in-vehicle wheel area.

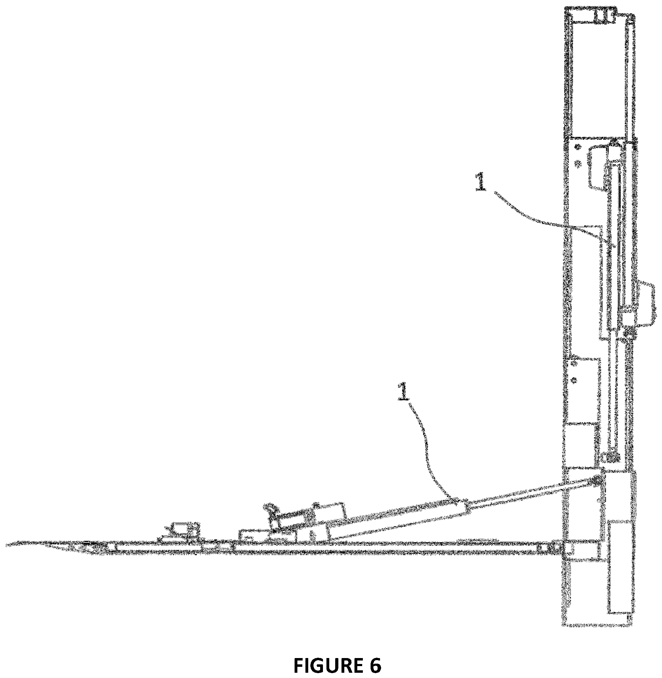

**Figure 6** is a view of the rear lift.

Drawings do not necessarily have to be scaled, and details not necessary for understanding the present invention may be omitted. Furthermore, elements that are at least substantially identical or have at least substantially identical functions are shown by the same number.

### Description of Part References

- 1: Electric actuator
- 2: Controller and digital screen
- 3: Input/Output user controller
- 4: Communication line
- 5: Electric supply negative line
- 6: Electric supply positive line
- 7: Extra function module
- H: Hydraulic cylinder

### Detailed Description of The Invention

In this detailed description, preferred embodiments of the invention are described only for a better understanding of the subject and without any limiting effect.

The invention relates to a new generation twin-deck semitrailer configuration that enables the vertical axis up/down movement of the intermediate platform of twin-deck semitrailers to be transformed into a 100% electric structure instead of working with the help of hydraulic cylinders and to increase efficiency.

The elements and their functions used in the system, which is the subject of the invention are as follows;

The electric actuator (1) is the structure that provides the necessary electrical drive to the cylinders to enable the moving floor/platform and rear lift to operate in the up/down and open/close direction. Preferably, between 6 and 10 electric actuators (1) are used in a vehicle.

The controller and digital screen (2) enable the user to adjust the functions of the system, calibrate it and monitor the system. The controller and digital screen (2) enable the user to observe the system simultaneously. Optionally, telematics connection is also possible and some functions, although limited, can be controlled remotely and all details can be followed from any location.

The Input/Output user controller (3) reads the technical information of the electric actuator (1) and transmits it to the controller and digital screen (2) and enables the user to intervene in the system. Control of the system is performed with a wired/wireless remote control with physical buttons. The remote control is connected to an Input/Output user controller (3) that can be placed anywhere on the communication line (4).

The communication line (4) is the protocol that provides electronic communication between the electric actuators (1) and all connections. Preferably, CanBus communication line (4) is used.

The electricity supply negative line (5) is the negative electricity supply line needed by the system.

The positive electricity supply line (6) is the positive electricity supply line needed by the system.

The extra function module (7) enables the installation and programming of equipment (lamp, special function, etc.) that can be installed later on the system.

The system, which is subject of the invention is a completely electrical design for the moving floor and rear lift. All connections are connected with sockets and all signals are sent via the communication line (4)/CanBus. This way, there is minimum use of cables and sockets. Thus, there is minimum use of cables and sockets. The entire structure in the system can be controlled with only 3 main lines/cables (Electricity supply negative line (5), Electrical supply positive line (6) and CanBus communication line (4)).

The moving floor consists of a configuration of 6 to 10 lifting electric actuators (1) with a stroke of 650 - 800 mm. These cylinders can collectively lift up to 15 Tons. It is not possible to load equally in every region due to the logistics activities in the trailer. Therefore, the structure will be ready for all kinds of loading conditions. Whether or not the load weight varies regionally, the height of the platform never changes.

The rear lift has electric actuators (1) that provide up and down movement. In addition, the rear lift has electric actuators (1) that provide opening and closing movements. Additionally, the platform can operate with 2 cylinders that will be controlled electro-hydraulically. Because users can request existing cylinders for the rear lift.

The general characteristics of the system, which is subject of the invention are as follows;

The electric actuator (1) in each cylinder has its own engine driver and an absolute encoder is used to monitor the position of the cylinder at all times. The electric actuator (1) is also equipped with a safety brake (fixing/stopping) controlled by 24V from the driver. In this way, safety is ensured in case of failure, so that it always remains stable at a safe level without power. The excess energy occurred during the downward movement of the moving floor/platform and the rear lift is fed back by the electric actuator (1) and stored at the maximum level. When used in reverse direction with electric engines/electric actuators (1), it acts as a generator and converts mechanical energy into electrical energy. While the moving platform moves downwards, in case that the reverse current capacity is greater than the positive current capacity, the excess energy occurring due to the nature of the electrical system can be stored at the maximum level. During downward operation of the electric actuator (1), kinetic energy is converted into electrical energy with the support of gravity, and the resulting excess energy is fed back and stored at the maximum level.

Some gradual inputs are possible on the controller and digital screen (2). For example;

### Level 0: Enqineerinq/manufacturer mode:

At this level, all actuator/engine parameters can be adjusted unlimitedly and the screen can be changed.

### Level 1: Installation/assemblv mode and authorized service mode:

At this level, the system configuration can be adjusted within certain frameworks. The maximum system speed (floor/elevator), maximum load as % and minimum height/maximum height can also be adjusted here. Herein it can also be set which data appears on the screen (heights, weights, speeds).

### Level 2: Service mode:

This level should allow maintenance/service work to be carried out. Replacing/adjusting new drives/cylinders and calibrating the system is possible here. Some (secure) system settings can also be adjusted here.

### Level 3: Customer/driver mode:

Customers (it depends on the customer whether they want to share this code with the driver or not) can adjust various stopping heights of the floor (maximum 3), timer setting of interior lighting, maximum lift/floor speed, angle sensor on/off.

If an actuator breaks down, the system stops and an error code is generated. Then, an option is given on the controller and digital screen (2). If continue without electric actuator (1) is selected, an instruction on how the drive should be is given on the controller and digital screen (2). Electric actuators (1) can be removed mechanically. Once landed a continue button can be pressed and a code for level 3 will be generated. The system can continue to operate at 20%-50% (can be changed at level 1) speed until the electric actuator (1) breaks down. (These limits are adjustable.)

When a new electric actuator (1) is installed, the system recognizes it and assigns a new address. An embedding protocol then starts on the controller and digital screen (2). This protocol relevant code is level 2. In this case, the electric actuator (1) is automatically calibrated in the down position as follows; The electric actuator (1) is reinstalled correctly by manually operating it at very low speed via the homing switch and using normal operation. After reentering the code (level 2), the system should perform these: slowly move all the way down (homing switch) and calibrate all cylinders to 0. The system returns to normal operation.

A Service Mode is provided which ensures that the system does not generate error codes. Each electric actuator (1) can be moved independently by remote control. After the process, the technician is responsible for returning the electric actuator (1) to the correct position. In case of excessive deviation (max. deviation can be set at level 1), the system must not operate in normal operation (level 2).

System speed can be adjusted on the screen within preset parameters. Acceleration and deceleration are also adjustable.

Maximum height and minimum height can be adjusted from the controller and digital screen (2). It is possible to adjust up to 3 levels on the controller and digital screen (2) in case the system itself stops and shows a green light. So the user can see that the trailer is flat. When it is controlled again, the floor passes this level and moves to the next level and automatically stops again.

The maximum load in kilograms/kg per electric actuator (1) is adjustable.

Interior lighting can be changed with a timer. The timer can be adjusted from the controller and digital screen (2). Lighting is switched via a separate lO/Input-Output card (canbus).

The platform can automatically stop at actual ground height. Deviations are minimal.

The controller and digital screen (2) are touch-sensitive and inform the user. For example, the following information can be accessed via the controller and digital screen (2);
- System opening date and time
- Historical malfunctions and instant malfunctions
- Battery capacity
- Height, load and similar information for each actuator
- Interior lighting status on/off information
- Actuator operating time, number
- Charge status of solar panels, if any, etc.
- User data
- Commissioning options
- Calibration options
- Number of platform and rear lift movements
- Travelled distance per actuator
- Number of overloaded drives
- Energy consumed in kwh
- Storage of historical data up to 1000

In the system, which is subject of the invention, the controller and digital screen (2) have a web-based online platform structure. The controller and digital screen (2) can be connected to the internet via 4G or Wi-Fi. There are two levels of entry:
Entry Level 1: all error codes and statuses are visible. However, it is not possible to change anything in the account.

Entry Level 2: all error codes and statuses are visible. Additionally all parameters can be changed. Remote codes must be entered to change any values of higher access levels. When entering a code, the code should not appear on the screen. Functions can also be operated freely. However, before this is possible the driver/customer receives a request on the screen and this request is confirmed (without a code) by a button on the controller and digital screen (2).

## Claims

1. A system that enables the movable floor/platform and rear lift of twin-deck semitrailers to operate with electric drive in up/down and open/close directions, **characterized by** comprising:
• An electric actuator (1) that provides the necessary electrical drive to the cylinders to enable the movable floor/platform and rear lift to operate in up/down and open/close directions,
• A controller and digital screen (2) that enable the functions of the system to be adjusted, calibrated and the system to be monitored,
• An Input/Output user controller (3) that reads the technical information of the electric actuators (1) and transmits it to the controller and digital screen (2), allowing the user to intervene in the system,
• A communication line (4) that provides electronic communication between electric actuators (1) and all connections,
• An electrical supply negative line (5) that provides the negative electricity supply needed by the system,
• An electrical supply positive line (6) that provides the positive electricity supply needed by the system.

2. The system according to claim 1, **characterized by** comprising an extra function module (7) that enables the installation and programming of equipment that can be installed later on the system.

3. The system according to claim 1, **characterized by** comprising a wired/wireless remote control with physical buttons that connects to an Input/Output user controller (3) that can be placed anywhere on the communication line (4) and provides control of the system.

4. The system according to claim 1, **characterized by** comprising a CanBus communication line (4).

5. The system according to claim 1, characterized a vehicle by comprising electric actuators (1) between 6 and 10.

6. The system according to claim 1, **characterized by** the electric actuator (1) in each cylinder comprising an engine driver.

7. The system according to claim 1, **characterized by** comprising an encoder that allows monitoring the position of the cylinder at all times.

8. The system according to claim 1, **characterized by** the electric actuator (1) comprising a locking/stopping safety brake controlled by 24V from the driver.

9. The system according to claim 1, **characterized by** comprising an electric actuator (1) that ensures that the excess energy generated during the downward movement of the moving floor/platform and the rear lift is fed back and stored at the maximum level.

10. The system according to claim 1, **characterized by** comprising a controller and a digital screen (2) that has a web-based online platform structure and can be connected to the internet via 4G or Wi-Fi.
